# EUROPEAN PATENT SPECIFICATION

(11) **EP 2 924 856 B1**
(45) Date of publication and mention of the grant of the patent: **12.04.2017**
(21) Application number: 13814406.8
(22) Date of filing: 26.11.2013
(51) Int. Cl.: H02K 17/04, H02K 3/02, H02K 17/06, H02K 3/28, H02K 17/08

(54) **SINGLE-PHASE INDUCTION MOTOR**
EINPHASIGER INDUKTIONSMOTOR
MOTEUR ASYNCHRONE MONOPHASÉ

(30) Priority: 26.11.2012 BR 102012029983
(43) Date of publication of application: 30.09.2015
(73) Proprietor: Whirlpool S.A., CEP: 04578-000 São Paulo - SP (BR)
(72) Inventor: KALLUF, Flavio J.H., Joinville - SC (BR); DE ESPINDOLA, Aleandro Amauri, CEP: 89218-600 - Joinville - SC (BR)
(74) Representative: Burt, Matthew Thomas
(86) International application number: PCT/BR2013/000509
(87) International publication number: WO 2014/078927

(56) References cited:
- CA-A1- 960 277
- US-A- 3 488 569
- US-A- 3 774 062
- US-B1- 6 255 755
- US-B1- 7 772 737

## Description

The present invention relates to a single-phase induction motor provided with a hybrid winding. The single-phase induction motor being used on hermetic cooling compressors.

### Description of the prior art

A single-phase induction motor is the type of engine most used in household cooling applications (refrigerators, freezers, and air-conditioners), being further used in various applications such as washing or drying machines, fans and pumps. Single-phase induction motors have the advantage that they can be connected to the phase voltage of electrical networks, usually available in residences and small rural properties, unlike three-phase motors. Additionally, this type of motor comprises two windings arranged on the stator, one of which is the main winding and the other is the auxiliary winding (or starting winding), the auxiliary winding having, as its main function, generating the turning field of the single-phase induction motor.

The single-phase induction motors known from the prior art have, in most cases, the main winding and auxiliary winding manufactured from copper, having excellent thermal and electrical properties, being an excellent electrical conductor, thus having low electric resistivity (on the order of 1.673 x 10⁻⁶ ohm.cm at 20°C.

The copper's application is not limited to the use on windings of single-phase induction motors, due to its efficiency, resistance and reliability, copper is the most used metal in any type of applications in which electrical or thermal conductivity is present. This is due to the fact that copper has excellent electric conductivity, is compatible with electric connectors and other devices and is easy to handle, which makes the installation easier. Additionally, copper meets the electrical specifications of most countries.

However, copper has the disadvantage that its cost has been increasing drastically in the last few years, and this factor has led manufacturers of single-phase induction motors to study other options of electric conductors. One of the options found was the use of aluminum in the single phase induction motor windings. Despite having 60% of the electric conductivity of copper, the use of aluminum windings on the stator proves to be advantageous in terms of cost, since aluminum is cheaper than copper. Besides, the density of aluminum, being approximately 1/3 of the copper density, reduces the weight of the windings (for a given resistance of the coils).

Some single-phase induction motors known from the state of art use aluminum windings, aluminum being used in the manufacture of both the main winding and the auxiliary winding. Additionally, it is known from the state of art single-phase induction motors that uses a combination of two types of conductors for manufacturing the stator windings. As an example, patent document US 3,488,569 describes a single-phase induction motor using both copper and aluminum winding. As an example, one can mention patent US 7,772,737, which describes an electric motor which the stator windings are formed by a first electric conductor and by a second electric conductor, the first and second electric conductors being connected in parallel and manufactured from copper and aluminum, respectively. Further, the US patent describes that the motor has another winding provided with a third electric conductor and with a fourth electric conductor, these being also connected in parallel.

The motor described in patent US 7,772,737 has the disadvantage that the current flow in the motor windings is not uniform, providing non-homogeneous heating of the motor and harmonic torques generation, which may cause undesirable noises and vibrations.

Further, four combinations are known regarding the type of conductor used for making the windings of a single-phase induction motor known from the prior art.

The first configuration would be the manufacture of the main winding and of the auxiliary winding from copper, this configuration is used on high-efficiency and/or high power-density motors and has a high manufacture cost. The second configuration makes use of the main winding made of copper and of the auxiliary winding made of aluminum, this configuration is used when it is possible to replace a small part of the total volume of copper by aluminum conductors. On the other hand, the third configuration is used when there is the possibility of replacing most of the total volume of copper by aluminum conductors, and this configuration consists in manufacturing the main winding from aluminum and the auxiliary winding from copper. The fourth and last configuration known from the prior art makes use of the main and auxiliary winding made of aluminum, this configuration being used on motors that do not require high efficiency and/or high power-density.

### Description of the prior art based on the drawings

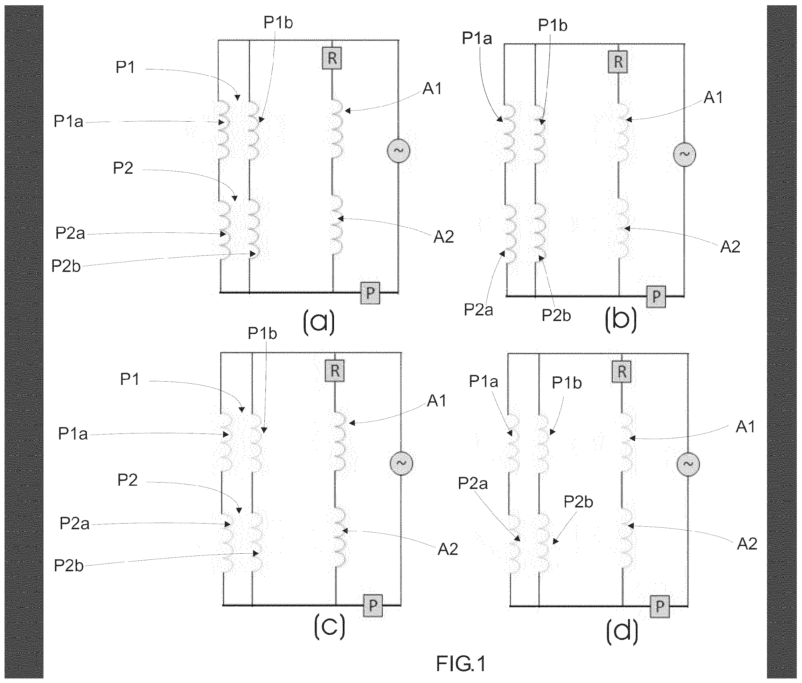

Figure 1 illustrates the four electric embodiments of the windings of a single-phase induction motor known from the prior art. Such prior-art motors, as already mentioned, have the main winding and the auxiliary winding manufactured using a single conductive material (copper or aluminum) or have the main winding manufactured from copper (or aluminum) and the auxiliary winding manufactured from aluminum (or copper). It is noted that the single-phase induction motors known from the prior art do not have copper and aluminum conductors on the same winding, as proposed by the present invention. The only known exception would be patent US 7,772737, however, this patent suggests that each branch of each winding should be formed by only one type of material, which would impair the operation of the motor, as already described before.

Figure 1 (a) shows the first embodiment of the windings of a single-phase induction motor known from the prior art, as can be observed, this motor has coils arranged at one of the poles P1 of the stator and coils arranged at the opposite pole P2 of the stator, wherein the first coil P1a, the second coil P1 b, the third coil P2a and the fourth coil P2b are composed of a first conductive material, in this case copper. Additionally, the auxiliary winding A also comprises a fifth coil A1 and a sixth coil A2 manufactured from copper. This type of configuration is used on high-efficiency motors and has a high manufacture cost.

As an alternative to the high manufacture cost of the configuration shown in figure 1 (a), one show in figure 1 (b) the configuration of the windings on which the coils located at pole P1 and the coils located at the opposite pole P2 continue to be manufactured from copper. However, in this configuration the auxiliary winding A of the induction motor is manufactured from aluminum. Such a configuration has a slightly lower manufacture cost as compared with the manufacture cost of the configuration shown in figure 1(b).

Another possible configuration known from the prior art, is the configuration of the windings shown in figure 1 (c). This configuration has the coils located at the pole P1 and the coils located at the opposite pole P2 manufactured from aluminum, on the other hand, the auxiliary winding A has its coils A1 and A2 manufactured from copper. In terms of cost, this configuration has a lower manufacture cost as compared with the manufacture cost of the configuration shown in figure 1 (b).

Figure 1 (d) shows the configuration in which all the windings (coils located at the pole P1 and the coils located at the opposite pole P2 and coils of the auxiliary winding A) of the single-phase induction motor are manufactured from aluminum. In terms of cost, this configuration is the one that has the lowest manufacture cost. However, considering that the coils of the main winding comprise 75% of the total volume of the electric conductors present on the motor winding, the number of motors which it is possible to use the configurations shown in figures 1 (c) and 1(d) is very small, since the use of aluminum is limited by the filling factor (ratio between the area occupied by the windings and the maximum area available for arranging them) of the single-phase induction motors.

As shown above, although the use of the largest possible amount of aluminum is always advantageous, the use of this type of conductor is limited by the filling factor, and when it is not possible to increase the slots area of the blade, a part of the conductors should remain as copper. The ideal balance of copper and aluminum also depends on other variables, as for instance the outer diameter of the stator, this occurs because the increase in slots for receiving the aluminum windings would require a larger outer diameter. In this case, one should calculate the cost of the increment in the total amount of steel, taking into account the increase in the slots for receiving the aluminum windings.

Among the four configurations known from the prior art and mentioned above, the fourth configuration (main winding and auxiliary winding made from aluminum) is the one that has the lowest cost. However, and as already mentioned, since the main winding is responsible for up to 75% of the total volume of the conductor, the number of motors on which it is possible to use this configuration is very small. So, in most cases it is not possible to use aluminum for manufacturing the main winding, just due to the limitations of filling the slots.

With a view to potentiate the use of aluminum on the prior-art induction motors, the present invention makes use of a single-phase induction motor provided with a hybrid winding, such hybrid winding comprising aluminum conductors in conjunction with copper conductors on the same winding branch, potentiating the applicability of aluminum on single-phase induction motors, thus reducing the total manufacture cost of the motor.

Further, the present invention makes use of single-phase induction motors provided with hybrid windings, such motors may be sized so as to be fed electrically by nominal voltage values of 115-127VAC or 220-140VAC.

Further, the present invention makes use of single-phase induction motors provided with hybrid windings, such motors may be sized to be used on bivolt motors, so that the same motor can be fed electrically by nominal voltage values of 115-127VAC or 220-140VAC.

### Objectives of the invention

The present application has the objective of providing a single-phase induction motor provided with hybrid windings.

Another objective of the present invention is to provide a single-phase induction motor provided with a hybrid winding and that can be fed by nominal voltage values of 115-127VAC or 220-240VAC.

It is also an objective of the present invention to provide a single-phase induction motor on which the current density on the branches and on the coils of the motor windings is homogeneous.

Finally, it is an objective of the present invention to provide a single phase induction motor that enables the use of an aluminum coil with a number of turns different from the number of turns of the copper coil, without causing unbalance of current flow or generating harmonic torques or even problems of heating or vibrations.

### Brief description of the invention

The objectives of the invention are achieved by providing a single-phase induction motor comprising a stator, the stator comprising a winding with a first coil P1 a, a second coil P1 b, a third coil P2a and a fourth coil P2b. The first coil P1 a and the third coil P2a are manufactured from a first conductive material 2. The second coil P1 b and the fourth coil P2b are manufactured from a second conductive material 3, with resistivity different from the first conductive material 2. The single-phase induction motor is configured so that the first coil P1 a and the second coil P1 b are arranged at one of the poles P1 of the stator. The third coil P2a and the fourth coil P2b are arranged at the pole P2 opposite that of the first coil P1a and of the second coil P1b. The first coil P1a and the fourth coil P2b are electrically connected in series, configuring a first branch (R1). The second coil P1 b and the third coil P2a are electrically connected through a connection in series, configuring a second branch R2.

### Brief description of the drawings

The present invention will now be described in greater detail with reference to the attached drawings, in which:
Figure 1 illustrates the electric connections of a single-phase induction motor known from the state of art;
Figure 2 is a representation of the electric connection of a single-phase induction motor as proposed in the present invention;
Figure 3 is a representation of the electric connection of one of the single-phase induction motor windings as proposed by the present invention with the series connection of the R1 and R2 branches.
Figure 4 is a representation of the electric connection of one of the single-phase induction motor windings as proposed by the present invention with the parallel connection of the R1 and R2 branches.

### Detailed description of the invention

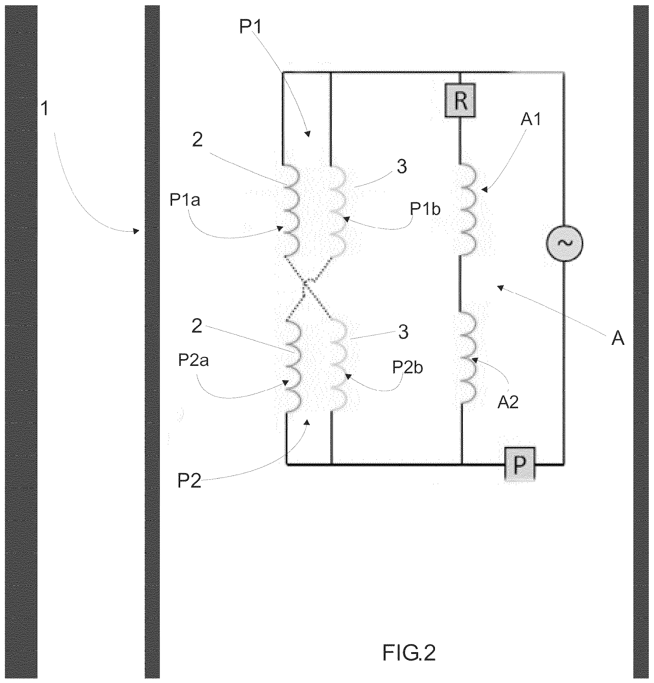

As can be observed in figure 2, one represents a preferred electrical connection of the single-phase induction motor provided with a stator as proposed in the present invention. Such a single-phase induction motor comprises a main winding with fourth coils, a first coil P1 a, a second coil P1 b, a third coil P2a and a fourth coil P2b, wherein the first coil P1 a and the third coil P2a are preferably manufactured from a first conductive material 2, this material being copper. On the other hand, the second coil P1 b and the fourth coil P2b are preferably manufactured from a second conductive material 3, this material being aluminum.

The main winding is configured so that the first coil P1 a and the second coil P1b are at one of the poles P1 of the stator, and the third coil P2a and the fourth coil P2b are at the opposite pole P2 of the stator. The electric connection in series of the first coil P1a and of the fourth coil P2b configures a first branch R1 of the single-phase induction motor of the present invention. On the other hand, the electric connection in series of the second coil P1b and of the third coil P2a configures a second branch R2. Such form of electric connection of the coils of the branches R1 and R2 configures a hybrid crossed connection of the induction motor described in the present invention and shown in figure 2.

Further, the single-phase induction motor proposed in the present invention guarantees the balance of the inductances and resistances and, as a result, guarantees that the current in the motor winding will be the same one. Additionally, the single-phase induction motor enables the use of a coil made of aluminum with a number of turns different than the number of turns of the copper coil, without causing unbalance of current flow or generating harmonic torques.

As can be better observed in figure 2, the single-phase induction motor further comprises an auxiliary winding A. In this preferred embodiment, the auxiliary winding A comprises a fifth coil A1 and a sixth coil A2 electrically connected in series and manufactured from the same material. It should be pointed out that, in an additional embodiment of the present single-phase induction motor, the auxiliary winding A might have the fifth coil A1 manufactured from copper and the sixth coil A2 manufactured from aluminum, or vice-versa.

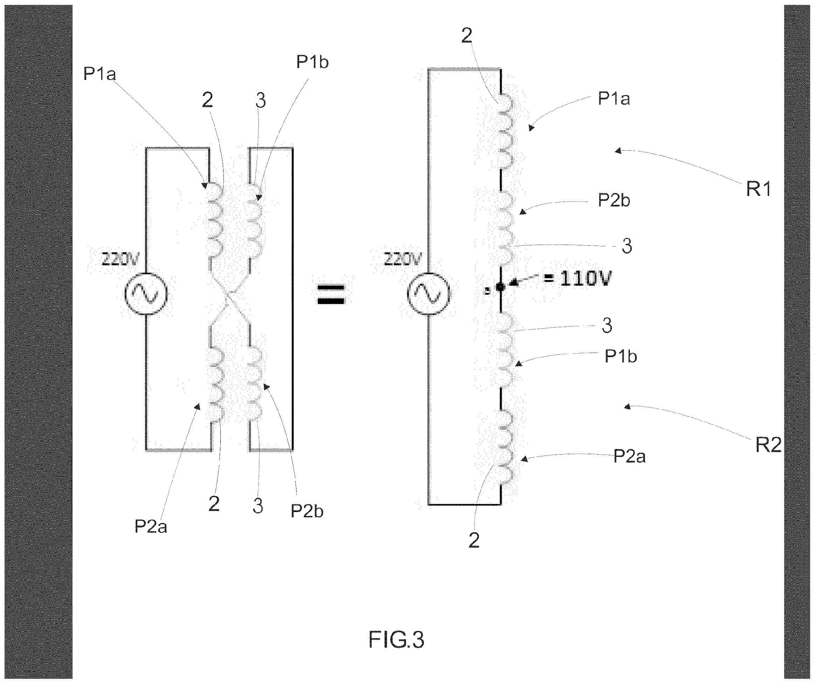

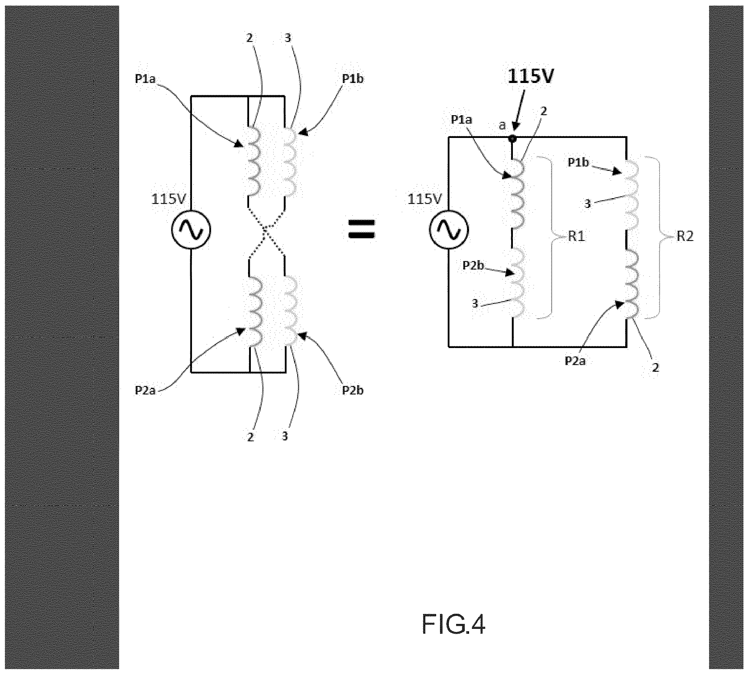

Additionally, present embodiment can be used for constructing bivolt single-phase induction motors, that is, configured to be fed electrically by nominal voltage values of 115-127VAC or 220-240VAC, without the need to alter the number of turns or the diameter of the wires. In this case, for the higher nominal voltage (220-240VAC), one should connect the branches R1 and R2 electrically in series, as shown in figure 3. On the other hand, for the lower nominal voltage (115-127VAC), one should connect them in parallel, as shown in figure 4.

Figure 3 shows the scheme of electrical connections that should be carried out in the case of nominal voltage in the range 220-240VAC. As can be observed, the branch R1, comprising the first coil P1 a and by the fourth coil P2b, is electrically connected in series with the branch R2, comprising the second coil P1 b and by the third coil P2a. In this preferred example of the induction motor, the first coil P1 a and the third coil P2a are manufactured from a first material 2, this material being copper. On the other hand, the second coil P1 b and the fourth coil P2b are manufactured from a second material 3, this material being aluminum.

In the case of feeding with nominal voltage in the range of 220-240VAC, the connection of the branches R1 and R2 in series enable the balance of voltage between such branches, dividing the voltage exactly by half.

Figure 4 shows the scheme of electric connections that should be carried out in the case of nominal voltage in the range of 115-127VAC. As can be observed, the branch R1, comprising the first coil P1 a and the fourth coil P2b, is electrically connected in parallel with the branch R2, comprising the second coil P1 b and the third coil P2a. The first coil P1 a and the third coil P2a are manufactured from copper and the coils P1b and P2b are manufactured from aluminum.

A preferred example of embodiment having been described, one should understand that the scope of the present invention embraces other possible variations, being limited only by the contents of the accompanying claims, which include the possible equivalents.

## Claims

1. A single-phase induction motor comprising:
a stator, the stator comprising a main winding with a first coil (P1 a),
a second coil (P1 b), a third coil (P2a) and a fourth coil (P2b), wherein:
the first coil (P1a) and the third coil (P2a) are manufactured from a first conductive material (2),
the second coil (P1b) and the fourth coil (P2b) are manufactured from a second conductive material (3), with resistivity other than that of the first conductive material (2),
the first coil (P1 a) and the second coil (P1 b) are arranged at one of the stator poles (P1),
the third coil (P2a) and the fourth coil (P2b) are arranged at the pole (P2) opposite that of the first coil (P1 a) and of the second coil (P1b),
the first coil (P1 a) and the fourth coil (P2b) are electrically connected to each other through a series connection, configuring a first branch (R1),
the second coil (P1b) and the third coil (P2a) are electrically connected through a connection in series, configuring a second branch (R2).
further **characterized in that** the first coil (P1 a) and the second coil (P1 b) comprise a number of turns equal to the number of turns of the third coil (P2a) and of the fourth coil (P2b).

2. The single-phase induction motor according to claim 1, the single-phase induction motor being **characterized by**:
comprise an auxiliary winding (A) provided with a fifth coil (A1) and a sixth coil (A2);
the first branch (R1) of the main winding being connected electrically in series with the second branch (R2).

3. The single-phase induction motor according to claim 1, the single-phase induction motor being **characterized by**:
comprise an auxiliary winding (A) provided with a fifth coil (A1) and a sixth coil (A2);
the first branch (R1) of the main winding being connected electrically in parallel with the second branch (R2).

4. The single-phase induction motor according to claim 2 or 3, the single-phase induction motor being **characterized in that** the auxiliary winding (A) is configured with the fifth coils (A1) and the sixth coil (A2) connected electrically in series and manufactured from the same conductive material.

5. The single-phase induction motor according to claim 2 or 3, the single-phase induction motor being **characterized in that** the auxiliary winding (A) is configured with the fifth coil (A1) and the sixth coil (A2) connected electrically in series, the fifth coil (A1) being manufactured from the first conductive material (2) and the sixth coil (A2) being manufactured from the second conductive material (3).

6. The single-phase induction motor according to claim 1, 2, 3, 4, or 5, the single-phase induction motor being **characterized by** being configured to bivolt applications, by switching the electric connections of the branches (R1) and (R2) either in series or in parallel.

7. The single-phase induction motor according to claim 1, 2, 3, 4, 5 or 6, **characterized in that** the first conductive material (2) is copper and the second conductive material (3) is aluminum.

8. The single-phase induction motor according to claim 1, 2, 3, 4, 5 or 6 **characterized in that** the first conductive material (2) is aluminum and the second conductive material (3) is copper.

## Patentansprüche

1. Ein Einzelphasen-Induktionsmotor umfassend:
einen Stator, wobei der Stator eine Hauptwicklung mit einer ersten Spule (P1), einer zweiten Spule (P1b), einer dritten Spule (P2a) und einer vierten Spule (P2b) umfasst,
wobei:
die erste Spule (P1a) und die dritte Spule (P2a) aus einem ersten leitfähigen Material (2) hergestellt sind,
die zweite Spule (P1b) und die vierte Spule (P2b) aus einem zweiten leitfähigen Material (3) mit einer Resistivität anders als diejenige des ersten leitfähigen Materials (2) hergestellt sind,
die erste Spule (P1a) und die zweite Spule (P1b) an einem der Statorpole (P1) angeordnet sind,
die dritte Spule (P2a) und die vierte Spule (P2b) an dem Pol (P2) gegenüber dem von der ersten Spule (P1a) und von der zweiten Spule (P1b) angeordnet sind,
die erste Spule (P1a) und die vierte Spule (P2b) elektrisch miteinander durch eine Reihenschaltung verbunden sind, ausbildend einen ersten Ast (R1),
die zweite Spule (P1b) und die dritte Spule (P2a) elektrisch verbunden sind durch eine Schaltung in Reihe, ausbildend einen zweiten Ast (R2).
darüberhinaus **dadurch gekennzeichnet, dass** die erste Spule (P1a) und die zweite Spule (P1b) eine Anzahl von Windungen aufweisen, die gleich ist zu der Anzahl von Windungen von der dritten Spule (P2a) und von der vierten Spule (P2b).

2. Der Einzelphasen-Induktionsmotor gemäß Anspruch 1, wobei der Einzelphasen-Induktionsmotor charakterisiert ist durch:
Umfassen einer Hilfswicklung (A) versehen mit einer fünften Spule (A1) und einer sechsten Spule (A2);
wobei der erste Ast (R1) der Hauptwicklung elektrisch in Reihe geschaltet ist mit dem zweiten Ast (R2).

3. Der Einzelphasen-Induktionsmotor gemäß Anspruch 1, wobei der Einzelphasen-Induktionsmotor **gekennzeichnet ist durch**:
Umfassen einer Hilfswicklung (A) versehen mit einer fünften Spule (A1) und einer sechsten Spule (A2);
wobei der erste Ast (R1) von der Hauptwicklung elektrisch parallel geschaltet ist mit dem zweiten Ast (R2).

4. Der Einzelphasen-Induktionsmotor gemäß Anspruch 2 oder Anspruch 3, wobei der Einzelphasen-Induktionsmotor **gekennzeichnet ist dadurch**, dass die Hilfswicklung (A) ausgebildet ist mit den fünften Spulen (A1) und der sechsten Spule (A2) elektrisch in Reihe geschaltet und hergestellt aus demselben leitfähigen Material.

5. Der Einzelphasen-Induktionsmotor gemäß Anspruch 2 oder Anspruch 3, wobei der Einzelphasen-Induktionsmotor **dadurch gekennzeichnet ist, dass** die Hilfswicklung (A) ausgebildet ist mit der fünften Spule (A1) und der sechsten Spule (A2) elektrisch in Reihe geschaltet, wobei die fünfte Spule (A1) hergestellt ist aus dem ersten leitfähigen Material (2) und die sechste Spule (A2) hergestellt ist aus dem zweiten leitfähigen Material (3).

6. Der Einzelphasen-Induktionsmotor gemäß Anspruch 1, 2, 3, 4 oder 5, wobei der Einzelphasen-Induktionsmotor **dadurch gekennzeichnet ist, dass** er ausgebildet ist zu Bivolt-Anwendungen, durch Schalten der elektrischen Verbindungen der Äste (R1) und (R2) entweder in Reihe oder parallel.

7. Der Einzelphasen-Induktionsmotor gemäß Anspruch 1, 2, 3, 4, 5 oder 6, **dadurch gekennzeichnet, dass** das erste leitfähige Material (2) Kupfer ist und das zweite leitfähige Material (3) Aluminium ist.

8. Der Einzelphasen-Induktionsmotor gemäß Anspruch 1, 2, 3, 4, 5 oder 6, **dadurch gekennzeichnet, dass** das erste leitfähige Material (2) Aluminium ist und das zweite leitfähige Material (3) Kupfer ist.

## Revendications

1. Moteur à induction monophasé comprenant:
un stator, le stator comprenant un enroulement principal avec une première bobine (P1a), une seconde bobine (P1b), une troisième bobine (P2a) et une quatrième bobine (P2b),
dans lequel
la première bobine (P1a) et la troisième bobine (P2a) sont fabriquées à partir d'un premier matériau conducteur (2),
la seconde bobine (P1b) et la quatrième bobine (P2b) sont fabriquées à partir d'un second matériau conducteur (3), présentant une résistivité différente de celle du premier matériau conducteur (2),
la première bobine (P1a) et la seconde bobine (P1b) sont disposées à l'un des pôles (P1) du stator,
la troisième bobine (P2a) et la quatrième bobine (P2b) sont disposées au niveau du pôle opposé (P2) à celui de la première bobine (P1a) et de la seconde bobine (P1b),
la première bobine (P1a) et la quatrième bobine (P2b) sont connectées électriquement l'une à l'autre par l'intermédiaire d'une connexion en série, configurant une première branche (R1),
la seconde bobine (P1b) et la troisième bobine (P2a) sont connectées électriquement par une connexion en série, configurant une seconde branche (R2),
**caractérisé en ce que** la première bobine (P1a) et la seconde bobine (P1b) comprennent un nombre de tours égal au nombre de tour de la troisième bobine (P2a) et de la quatrième bobine (P2b).

2. Moteur à induction monophasé selon la revendication 1, **caractérisé en ce qu'**il comprend un enroulement auxiliaire (A) muni d'une cinquième bobine (A1) et une sixième bobine (A2),
la première branche (R1) de l'enroulement principal étant connectée électriquement en série avec la seconde branche (R2).

3. Moteur à induction monophasé selon la revendication 1, **caractérisé en ce qu'**il comprend un enroulement auxiliaire (A) muni d'une cinquième bobine (A1) et une sixième bobine (A2),
la première branche (R1) de l'enroulement principal étant connectée électriquement en parallèle avec la seconde branche (R2).

4. Le moteur à induction monophasé selon la revendication 2 ou 3, **caractérisé en ce que** l'enroulement auxiliaire (A) est configuré avec les cinquième bobine (A1) et sixième bobine (A2) connectées électriquement en série et fabriquées à partir du même matériau conducteur.

5. Moteur à induction monophasé selon la revendication 2 ou 3, **caractérisé en ce que** l'enroulement auxiliaire (A) est configuré avec la cinquième bobine (A1) et la sixième bobine (A2) connectées électriquement en série, la cinquième bobine (A1) étant fabriquée à partir du premier matériau conducteur (2) et la sixième bobine (A2) étant fabriquée à partir du second matériau conducteur (3).

6. Moteur à induction monophasé selon la revendication 1, 2, 3, 4 ou 5, **caractérisé en ce qu'**il est configuré pour des applications bivolt, en changeant les connexions électriques des branches (R1) et (R2), soit en série soit en parallèle.

7. Moteur à induction monophasé selon la revendication 1, 2, 3, 4, 5 ou 6, **caractérisé en ce que** le premier matériau conducteur (2) est en cuivre et le second matériau conducteur (3) est en aluminium.

8. Moteur à induction monophasé selon la revendication 1, 2, 3, 4, 5, ou 6, **caractérisé en ce que** le premier matériau conducteur (2) est en aluminium et le second matériau conducteur (3) est en cuivre.
